# EUROPEAN PATENT SPECIFICATION

(11) **EP 3 001 757 B1**
(45) Date of publication and mention of the grant of the patent: **05.10.2016**
(21) Application number: 15181966.1
(22) Date of filing: 21.08.2015
(51) Int. Cl.: H04W 72/12

(54) **ELECTRONIC DEVICE WITH COMMUNICATION FUNCTION**
ELEKTRONISCHE VORRICHTUNG MIT KOMMUNIKATIONSFUNKTION
DISPOSITIF ÉLECTRONIQUE AVEC FONCTION DE COMMUNICATION

(30) Priority: 24.09.2014 JP 2014193603
(43) Date of publication of application: 30.03.2016
(73) Proprietor: Alps Electric Co., Ltd., Tokyo 145-8501 (JP)
(72) Inventor: Oi, Namio, Tokyo, Tokyo 145-8501 (JP)
(74) Representative: Klunker . Schmitt-Nilson . Hirsch

(56) References cited:
- US-A1- 2008 318 630
- US-A1- 2009 111 378
- US-A1- 2011 053 638

## Description

This application claims benefit of Japanese Patent Application No. 2014-193603 filed on September 24, 2014.

The present invention relates to an electronic device with a communication function that performs wireless communication, and particularly, to an electronic device with a communication function that performs wireless communication using a plurality of different communication schemes.

In the related art, a communication device for wirelessly connecting electronic devices to each other using a frequency band called an ISM (Industry Science Medical) band has been actively developed. IEEE802.11b/g/n referred to as WLAN, WiFi, or the like, Bluetooth (registered trademark), and the like are known as wireless communication schemes used in such a type of communication device.

In recent years, an electronic device with a communication function such as a photo printer, car navigation, or a smartphone with a communication device that is able to perform wireless communication using a plurality of these different communication schemes has been widely spread.

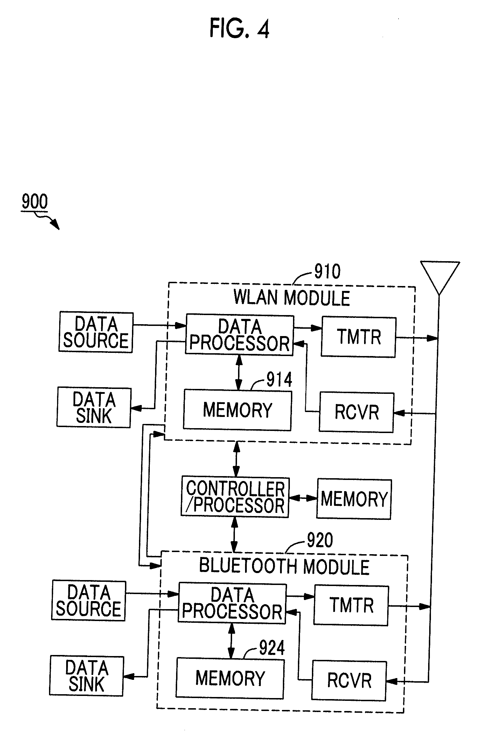

An electronic device (terminal) 900 with a communication function described in PCT Japanese Translation Patent Publication No. 2010-532954 includes a WLAN module 910 that supports communication with a WLAN, and a Bluetooth module 920 that supports communication with a Bluetooth device, as illustrated in Fig. 4.

The WLAN module 910 includes a memory 914, and data and a program code for the WLAN module 910 are stored in the memory 914. Further, the Bluetooth module 920 includes a memory 924, and data for the Bluetooth module 920 is stored in the memory 924.

Thus, a technology for constituting the electronic device 900 with a communication function by providing dedicated memory in each of the WLAN module 910 and the Bluetooth module 920 is disclosed. In such a configuration, it is necessary to provide the memory to each of the WLAN module and the Bluetooth module. Accordingly, this configuration is not suitable for downsizing, and increases cost.

In order to prevent such a problem, for example, it is considered that a memory is provided only in the WLAN module, and data for the Bluetooth module is also stored in the memory provided in the WLAN module.

In this case, when the Bluetooth module is to be operated, the WLAN module is first operated, data for the Bluetooth module is read, and then, the Bluetooth module is operated.

Thus, the memory is provided in one communication module (communication unit), and thus, it is possible to downsize an electronic device with a communication function and to prevent increase in cost.

However, in the electronic device with a communication function described above, it is necessary to start up the communication unit including a memory to operate a communication unit not including a memory that stores data necessary for an operation. Therefore, it takes time to start communication when the communication is performed using the communication unit not including a memory. Further, there is a problem in that the communication unit not including a memory is not operated and reliability is degraded when the operation of the communication unit including a memory fails.

The present invention provides an electronic device with a communication function that is capable of achieving decrease in cost by not providing a nonvolatile memory to each communication unit and shortening the time taken to start communication, and has high reliability.

An electronic device with a communication function of an embodiment of the present invention includes: a first communication unit including first transmission and reception means, first communication control means for performing communication control of the first transmission and reception means, and a first nonvolatile memory connected to the first communication control means, and performing wireless communication using a first communication scheme; a second communication unit including second transmission and reception means, and second communication control means for performing communication control of the second transmission and reception means, and performing wireless communication using a second communication scheme; a main control unit that controls the first communication unit and the second communication unit, and a main nonvolatile memory connected to the main control unit; and connection means for connecting the first communication unit to the main control unit and connecting the second communication unit to the main control unit, in which first information for operating the first communication control means and second information for operating the second communication control means are stored in the first nonvolatile memory, and the main control unit acquires the second information from the first nonvolatile memory via the first communication control means and stores the second information in the main nonvolatile memory, and reads the second information from the main nonvolatile memory and transmits the second information to the second communication unit when control of the second communication unit is performed.

Accordingly, the main control unit acquires the second information from the first nonvolatile memory via the first communication control means, and stores the second information in the main nonvolatile memory. Therefore, even when the first communication unit then fails, the second communication control means can perform control of the second transmission and reception means based on the second information stored in the main nonvolatile memory, and thus, it is possible to provide an electronic device with a communication function that has high reliability. Further, since the first information for operating the first communication control means is stored in the first nonvolatile memory, the first communication control means can perform control of the first transmission and reception means based on the first information stored in the first nonvolatile memory. Further, the second communication control means can perform control of the second transmission and reception means based on the second information stored in the main nonvolatile memory. When communication is performed in the second communication unit, it is not necessary to acquire the second information from the first communication unit via the main control unit, and thus, it is possible to shorten the time taken to start the communication. Therefore, it is possible to provide an electronic device with a communication function that is capable of achieving decrease in cost by not providing a nonvolatile memory to each communication unit and shortening thetime taken to start the communication, and has high reliability.

Further, in the electronic device with a communication function according to an embodiment of the present invention, when the main control unit is unable to acquire the second information from the main nonvolatile memory, the main control unit acquires the second information from the first nonvolatile memory via the first communication control means and stores the second information in the main nonvolatile memory.

Accordingly, when the main control unit is unable to acquire the second information from the main nonvolatile memory, for example, when the second information is not stored or when data is damaged, the main control unit acquires the second information from the first nonvolatile memory via the first communication control means and stores the second information in the main nonvolatile memory. Thus, the second information can be automatically stored in the main nonvolatile memory without a particular operation.

According to the present invention, it is possible to provide an electronic device with a communication function that is capable of achieving decrease in cost by not providing a nonvolatile memory to each communication unit and shortening thetime taken to start communication, and has high reliability.

### BRIEF DESCRIPTION OF THE DRAWINGS

Fig. 1 is a block diagram illustrating a configuration of an electronic device with a communication function according to an embodiment of the present invention;
Figs. 2A and 2B are schematic diagrams illustrating a storage area and stored information of a first nonvolatile memory and a main nonvolatile memory;
Fig. 3 is a flowchart illustrating an operation of the electronic device with a communication function; and
Fig. 4 is a block diagram illustrating a configuration of a terminal (the electronic device with a communication function) of the related art.

Hereinafter, an electronic device 100 with a communication function in a first embodiment will be described.

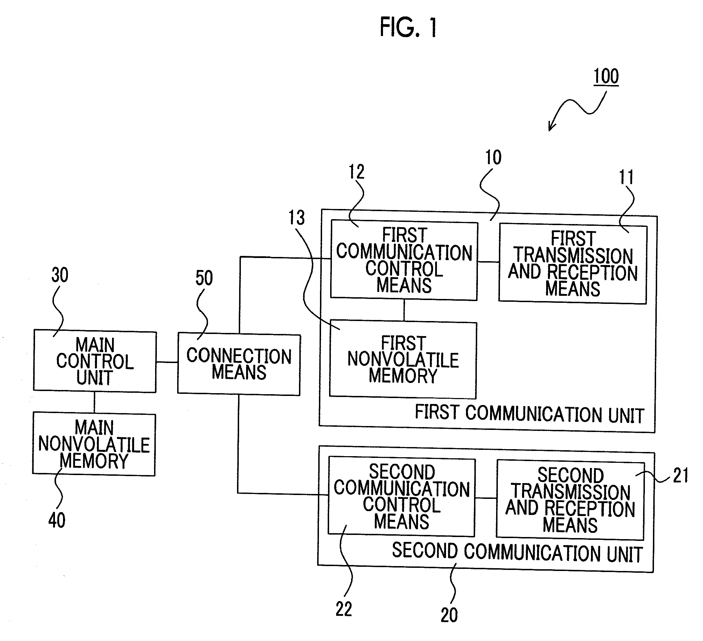

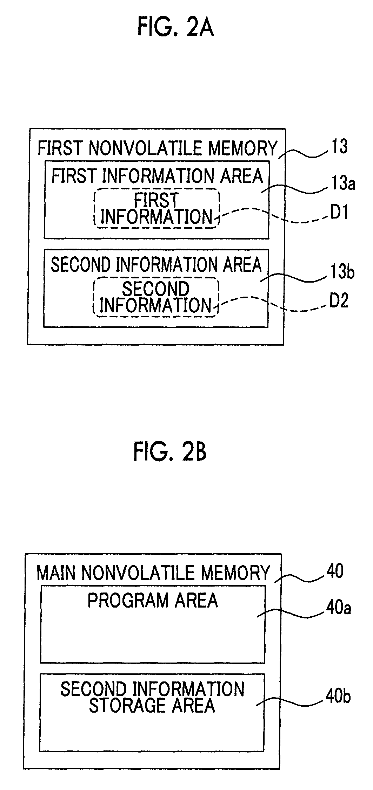

A configuration of the electronic device 100 with a communication function in this embodiment will first be described using Figs. 1 and 2. Fig. 1 is a block diagram illustrating the configuration of the electronic device 100 with a communication function. Figs. 2A and 2B are schematic diagrams illustrating storage areas and stored information of a first nonvolatile memory 13 and a main nonvolatile memory 40. Fig. 2A is a schematic diagram illustrating the storage area and the stored information of the first nonvolatile memory 13, and Fig. 2B is a schematic diagram illustrating the storage area and the stored information of the main nonvolatile memory 40.

The electronic device 100 with a communication function includes a first communication unit 10, a second communication unit 20, a main control unit 30, a main nonvolatile memory 40, and connection means 50, as illustrated in Fig. 1.

The first communication unit 10 includes first transmission and reception means 11, first communication control means 12, and a first nonvolatile memory 13, as illustrated in Fig. 1, and can perform wireless communication using a first communication scheme. The first communication control means 12 included in the first communication unit 10 is connected to the first transmission and reception means 11 and the first nonvolatile memory 13, and is connected to the main control unit 30 via the connection means 50. Further, in this embodiment, the first communication scheme is assumed to be a WLAN.

The second communication unit 20 includes second transmission and reception means 21, and second communication control means 22, as illustrated in Fig. 1, and can perform wireless communication using a second communication scheme. The second communication control means 22 included in the second communication unit 20 is connected to the second transmission and reception means 21, and is connected to the main control unit 30 via the connection means 50. Further, in this embodiment, the second communication scheme is assumed to be Bluetooth.

The first transmission and reception means 11 is controlled by the first communication control means 12 to perform transmission and reception of a radio signal so as to perform wireless communication using the first communication scheme.

For the first nonvolatile memory 13, an EEPROM, a flash memory, or the like is used, and a first information area 13a and a second information area 13b are provided, as illustrated in Fig. 2A. First information D1 for operating the first communication control means 12 is stored in the first information area 13a in advance, and second information D2 for operating the second communication control means 22 stored in the second information area 13b in advance.

Address information (MAC address) necessary for the first communication unit 10 to perform communication using a first communication control scheme, setting value information for the first communication control means 12 controlling the first transmission and reception means 11 to set a transmission output to a default value, or the like is contained in the first information D1. Further, address information (BD address) necessary for the second communication unit 20 to perform communication using a second communication control scheme, setting value information for the second communication control means 22 controlling the second transmission and reception means 21 to set a transmission output to a default value, or the like is contained in the second information D2.

The second transmission and reception means 21 is controlled by the second communication control means 22 to perform transmission and reception of a radio signal for performing wireless communication using the second communication scheme.

Further, the first communication unit 10 and the second communication unit 20 may be configured as a composition module integrally formed to perform wireless communication using the first communication scheme and the second communication scheme, or may be configured as individual modules performing wireless communication using respective communication schemes.

The main control unit 30 is connected to the first communication unit 10 and the second communication unit 20 via the connection means 50, as illustrated in Fig. 1. Further, the main nonvolatile memory 40 is connected to the main control unit 30, and the first communication unit 10 and the second communication unit 20 are controlled based on a control program written to the main nonvolatile memory 40 in advance.

For the main nonvolatile memory 40, an EEPROM, a flash memory, or the like is used, and a program area 40a in which the control program with which the main control unit 30 operates is stored, and a second information storage area 40b for storing the second information D2 for operating the second communication control means 22 included in the second communication unit 20 are set in advance, as illustrated in Fig. 2B. Further, an initial state is assumed to be a state in which no information is stored in the second information storage area 40b.

The connection means 50 connects the first communication unit 10 and the second communication unit 20 to the main control unit 30, and may be provided as a connector in the first communication unit 10 and the second communication unit 20, and a board (not illustrated) on which the main control unit 30 is mounted. Further, the connection means 50 may be configured as a wiring pattern including a connection terminal and a soldering pattern, which connect the first communication unit 10 and the second communication unit 20 to the main control unit 30.

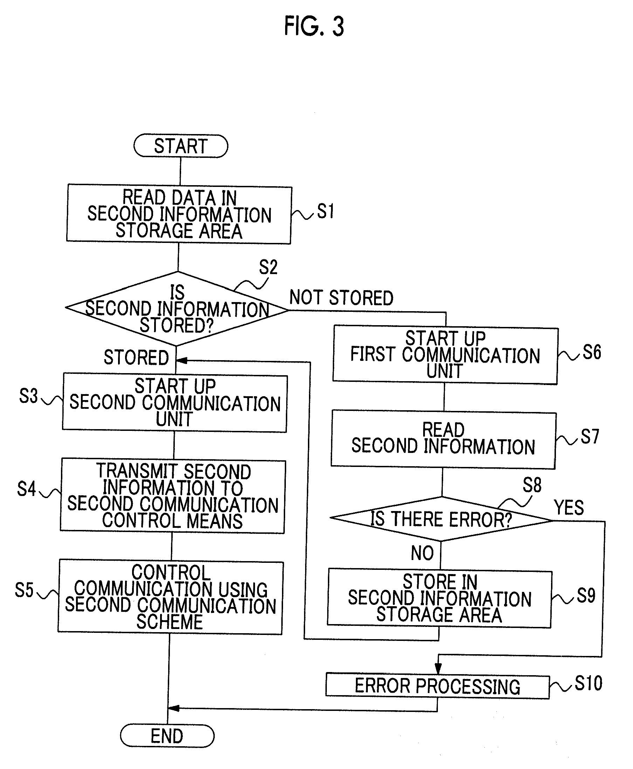

Next, an operation of the electronic device 100 with a communication function will be described using Fig. 3. Fig. 3 is a flowchart illustrating an operation of the electronic device 100 with a communication function. A process procedure shown in a flowchart of Fig. 3 is as a control program written to the program area 40a of the main nonvolatile memory 40, and is executed by the main control unit 30 when the second communication unit 20 is controlled and communication is started using the second communication scheme.

When the main control unit 30 controls the first communication unit 10 to start communication using the first communication scheme, the main control unit 30 controls the first communication control means 12 to acquire the first information D1 from the first nonvolatile memory 13, and performs communication control of the first transmission and reception means 11. Thus, the first communication unit 10 performs wireless communication using the first communication scheme.

When the main control unit 30 controls the second communication unit 20 and starts the communication using the second communication scheme, the main control unit 30 reads the data in the second information storage area 40b of the main nonvolatile memory 40 in step S1 illustrated in Fig. 3, and proceeds to step S2.

In step S2, the main control unit 30 determines whether the second information D2 is stored in the second information storage area 40b of the main nonvolatile memory 40 from the read data, and proceeds to step S3 when it is determined that the second information D2 is stored. Further, when it is determined that the second information D2 is not stored, the main control unit 30 proceeds to step S6. Since any information is not stored in the second information storage area 40b in the initial state, the process proceeds to step S6 when a processing procedure of the flowchart illustrated in Fig. 3 is first performed.

In step S6, the main control unit 30 controls the first communication control means 12 to start up the first communication unit 10, and proceeds to step S7.

In step S7, the main control unit 30 reads the second information D2 from the first nonvolatile memory 13 via the first communication control means 12, and proceeds to step S8.

In step S8, it is determined whether the second information D2 has been able to be correctly read without a reading error or the like from the first nonvolatile memory 13. The process proceeds to step S9 when it is determined that the second information D2 has been able to be correctly read, and to step S10 when it is determined that the second information D2 has been unable to be correctly read.

In step S10, error processing such as reporting to a user using reporting means (for example, an image or sound) indicating that the first communication control means 12 or the first nonvolatile memory 13 is not correctly operating is performed, and a control operation ends. Thus, error processing such as reporting to the user is performed when the second information D2 is not read from the first nonvolatile memory 13 of the first communication unit 10, and accordingly, it is possible to inform the user that the first communication control means 12 or the first nonvolatile memory 13 is not correctly operating.

In step S9, the main control unit 30 stores the acquired second information D2 in the main nonvolatile memory 40 since it is determined that the second information D2 has been correctly read without a reading error or the like from the first nonvolatile memory 13 in step S8, and proceeds to

### step S3.

The process proceeds to step S3 when it is determined in step S2 that the second information D2 is stored in the second information storage area 40b of the main nonvolatile memory 40 and when the second information D2 acquired from the first nonvolatile memory 13 is caused to be stored in the main nonvolatile memory 40 in step S9. In step S3, the main control unit 30 controls the second communication control means 22 to start up the second communication unit 20, and proceeds to step S4.

In step S4, the main control unit 30 transmits the second information D2 to the second communication control means 22, and proceeds to step S5.

The second communication control means 22 can control the second transmission and reception means 21 based on the second information D2 sent in step S4. Thus, in step S5, the main control unit 30 controls the second communication unit 20 to start the communication in the second communication scheme, and ends the processing operation.

When the operation is started from the initial state in which no information is stored in the second information storage area 40b, the processing operation is performed in order of steps S1, S2, S6, S7, S8, S9, S3, S4, and S5.

Once the second information D2 is stored in the main nonvolatile memory 40, the processing operation is performed in order of steps S1, S2, S3, S4, and S5. Therefore, when control of the second communication unit 20 is performed, the main control unit 30 reads the second information D2 from the main nonvolatile memory 40 and transmits the second information D2 to the second communication control means 22 of the second communication unit 20. Since it is not necessary to acquire the second information D2 from the first communication unit 10 via the main control unit 30 and the procedure from step S6 to step S8 is not performed, it is possible to shorten the time taken to start the communication when the communication is performed in the second communication unit 20.

The second communication control means 22 acquires the second information D2 from the main nonvolatile memory 40 based on control of the main control unit 30, and performs communication control of the second transmission and reception means 21. Thus, the second communication unit 20 performs wireless communication using the second communication scheme.

Hereinafter, effects of this embodiment will be described.

The electronic device 100 with a communication function of this embodiment includes the first communication unit 10 including the first transmission and reception means 11, the first communication control means 12, and the first nonvolatile memory 13, and performing wireless communication using the first communication scheme; the second communication unit 20 including the second transmission and reception means 21 and the second communication control means 22, and performing wireless communication using the second communication scheme; the main control unit 30; the main nonvolatile memory 40; and the connection means 50. The first information D1 for operating the first communication control means 12 and the second information D2 for operating the second communication control means 22 are stored in the first nonvolatile memory 13. The main control unit 30 acquires the second information D2 from the first nonvolatile memory 13 via the first communication control means 12, and stores the second information D2 in the main nonvolatile memory 40. When the main control unit 30 performs control of the second communication unit 20, the main control unit 30 reads the second information D2 from the main nonvolatile memory 40, and transmits the second information D2 to the second communication unit 20.

Accordingly, the main control unit 30 acquires the second information D2 from the first nonvolatile memory 13 via the first communication control means 12, and stores the second information D2 in the main nonvolatile memory 40. Therefore, even when the first communication unit 10 then fails, the second communication control means 22 can perform control of the second transmission and reception means 21 based on the second information D2 stored in the main nonvolatile memory 40, and thus, it is possible to provide an electronic device with a communication function that has high reliability. Further, since the first information D1 for operating the first communication control means 12 is stored in the first nonvolatile memory 13, the first communication control means 12 can perform control of the first transmission and reception means 11 based on the first information D1 stored in the first nonvolatile memory 13. Further, the second communication control means 22 can perform control of the second transmission and reception means 21 based on the second information D2 stored in the main nonvolatile memory 40. When communication is performed in the second communication unit 20, it is not necessary to acquire the second information D2 from the first communication unit 10 via the main control unit 30, and thus, it is possible to shorten thetime taken to start the communication. Therefore, it is possible to provide an electronic device with a communication function that is capable of achieving decrease in cost by not providing a nonvolatile memory to each communication unit and shortening the time taken to start the communication, and has high reliability.

Further, in the electronic device 100 with a communication function of this embodiment, when the second information D2 is not stored in the main nonvolatile memory 40, the main control unit 30 is configured to acquire the second information D2 from the first nonvolatile memory 13 via the first communication control means 12 and store the second information D2 in the main nonvolatile memory 40.

Accordingly, since the main control unit 30 acquires the second information D2 from the first nonvolatile memory 13 via the first communication control means 12 and stores the second information D2 in the main nonvolatile memory 40 when the second information D2 is not stored in the main nonvolatile memory 40, the second information D2 can be automatically stored in the main nonvolatile memory 40 without a particular operation.

While the electronic device 100 with a communication function according to the embodiment of the present invention has been described above in details, the present invention is not limited to the above-described embodiment and can be changed and embodied in various ways without departing from the gist. For example, the present invention may be changed and embodied as follows, and these embodiments also belong to the technical range of the present invention.
(1) In this embodiment, while the example in which the first communication scheme is the WLAN and the second communication scheme is the Bluetooth has been described, the first communication scheme may be the Bluetooth and the second communication scheme may be the WLAN. Further, the present invention may be changed and embodied so that communication schemes other than the WLAN and the Bluetooth may be used as the first communication scheme or the second communication scheme.
(2) In this embodiment, while the example in which the error processing is immediately performed when the second information D2 is not correctly read from the first nonvolatile memory 13 has been described, the present invention may be changed so that reading is performed a plurality of times when the second information D2 is not correctly read.
(3) In this embodiment, while it is determined whether the second information D2 is stored in the second information storage area 40b of the main nonvolatile memory 40, and the second information D2 is read from the first nonvolatile memory 13 when it is determined that the second information D2 is not stored, the present invention is not limited thereto, and the second information D2 may be read from the first nonvolatile memory 13 when there is data damage, failure, or a reading error in the main nonvolatile memory 40.

It should be understood by those skilled in the art that various modifications, combinations, sub-combinations and alterations may occur depending on design requirements and other factors insofar as they are within the scope of the appended claims of the equivalents thereof.

## Claims

1. An electronic device with a communication function comprising:
a first communication unit (10) including first transmission and reception means (11), first communication control means (12) for performing communication control of the first transmission and reception means (11), and a first nonvolatile memory (13) connected to the first communication control means (12), and performing wireless communication using a first communication scheme;
a second communication unit (20) including second transmission and reception means (21), and second communication control means (22) for performing communication control of the second transmission and reception means (21), and performing wireless communication using a second communication scheme;
a main control unit (30) that controls the first communication unit (10) and the second communication unit (20) ;
a main nonvolatile memory (40) connected to the main control unit (30); and
connection means (50) for connecting the first communication unit (10) to the main control unit (30) and connecting the second communication unit (20) to the main control unit (30),
**characterized in that** first information (D1) for operating the first communication control means (12) and second information (D2) for operating the second communication control means (22) are stored in the first nonvolatile memory (13), and
the main control unit (30) configured to
acquire the second information (D2) from the first nonvolatile memory (13) via the first communication control means (12) and to store the second information (D2) in the main nonvolatile memory (40), and
to read the second information (D2) from the main nonvolatile memory (40) and to transmit the second information (D2) to the second communication unit (20) when control of the second communication unit (20) is performed.

2. The electronic device with a communication function according to claim 1,
wherein when the main control unit (30) is unable to acquire the second information (D2) from the main nonvolatile memory (40), the main control unit (30) is configured to acquire the second information (D2) from the first nonvolatile memory (13) via the first communication control means (12) and to store the second information (D2) in the main nonvolatile memory (40).

## Patentansprüche

1. Elektronische Vorrichtung mit Kommunikationsfunktion, aufweisend:
eine erste Kommunikationseinheit (10), die eine erste Sende- und Empfangseinrichtung (11), eine erste Kommunikationssteuereinrichtung (12) zum Ausführen einer Kommunikationssteuerung der ersten Sende- und Empfangseinrichtung (11) und einen mit der ersten Kommunikationssteuereinrichtung (12) verbundenen ersten nichtflüchtigen Speicher (13) beinhaltet und eine drahtlose Kommunikation unter Verwendung eines ersten Kommunikationsschemas ausführt;
eine zweite Kommunikationseinheit (20), die eine zweite Sende- und Empfangseinrichtung (21) und eine zweite Kommunikationssteuereinrichtung (22) zum Ausführen einer Kommunikationssteuerung der zweiten Sendeund Empfangseinrichtung (21) beinhaltet und eine drahtlose Kommunikation unter Verwendung eines zweiten Kommunikationsschemas ausführt;
eine Hauptsteuereinheit (30), die die erste Kommunikationseinheit (10) und die zweite Kommunikationseinheit (20) steuert;
einen nichtflüchtigen Hauptspeicher (40), der mit der Hauptsteuereinheit (30) verbunden ist; und
eine Verbindungseinrichtung (50) zum Verbinden der ersten Kommunikationseinheit (10) mit der Hauptsteuereinheit (30) und zum Verbinden der zweiten Kommunikationseinheit (20) mit der Hauptsteuereinheit (30), **dadurch gekennzeichnet,**
**dass** erste Information (D1) zum Betreiben der ersten Kommunikationssteuereinrichtung (12) und zweite Information (D2) zum Betreiben der zweiten Kommunikationssteuereinrichtung (22) in dem ersten nichtflüchtigen Speicher (13) gespeichert sind, und
**dass** die Hauptsteuereinheit (30) dazu ausgebildet ist,
die zweite Information (D2) von dem ersten nichtflüchtigen Speicher (13) über die erste Kommunikationssteuereinrichtung (12) zu beziehen und die zweite Information (D2) in dem nichtflüchtigen Hauptspeicher (40) zu speichern, sowie
die zweite Information (D2) aus dem nichtflüchtigen Hauptspeicher (40) auszulesen und die zweite Information (D2) an die zweite Kommunikationseinheit (20) zu übermitteln, wenn die Steuerung der zweiten Kommunikationseinheit (20) ausgeführt wird.

2. Elektronische Vorrichtung mit Kommunikationsfunktion nach Anspruch 1, wobei dann, wenn die Hauptsteuereinheit (30) nicht in der Lage ist, die zweite Information (D2) von dem nichtflüchtigen Hauptspeicher (40) zu beziehen, die Hauptsteuereinheit (30) dazu ausgebildet ist, die zweite Information (D2) von dem ersten nichtflüchtigen Speicher (13) über die erste Kommunikationssteuereinrichtung (12) zu beziehen und die zweite Information (D2) in dem nichtflüchtigen Hauptspeicher (40) zu speichern.

## Revendications

1. Dispositif électronique avec une fonction de communication comprenant :
une première unité de communication (10) incluant des premiers moyens d'émission et de réception (11), des premiers moyens de commande de communication (12) pour réaliser une commande de communication des premiers moyens d'émission et de réception (11), et une première mémoire non volatile (13) connectée aux premiers moyens de commande de communication (12), et réalisant une communication sans fil en utilisant un premier un schéma de communication ;
une seconde unité de communication (20) incluant des seconds moyens d'émission et de réception (21), et des seconds moyens de commande de communication (22) pour réaliser une commande de communication des seconds moyens d'émission et de réception (21), et réalisant une communication sans fil en utilisant un second schéma de communication ;
une unité de commande principale (30) qui commande la première unité de communication (10) et la seconde unité de communication (20) ;
une mémoire non volatile principale (40) connectée à l'unité de commande principale (30) ; et
des moyens de connexion (50) pour connecter la première unité de communication (10) à l'unité de commande principale (30) et connecter la seconde unité de communication (20) à l'unité de commande principale (30),
**caractérisé en ce qu'**une première information (D1) pour faire fonctionner les premiers moyens de commande de communication (12) et une seconde information (D2) pour faire fonctionner les seconds moyens de commande de communication (22) sont stockées dans la première mémoire non volatile (13), et
l'unité de commande principale (30) est configurée pour acquérir la seconde information (D2) depuis la première mémoire non volatile (13) via les premiers moyens de commande de communication (12) et stocker la seconde information (D2) dans la mémoire non volatile principale (40), et
lire la seconde information (D2) depuis la mémoire non volatile principale (40) et pour transmettre la seconde information (D2) vers la seconde unité de communication (20) quand une commande de la seconde unité de communication (20) est réalisée.

2. Dispositif électronique avec une fonction de communication selon la revendication 1,
dans lequel quand l'unité de commande principale (30) ne peut pas acquérir la seconde information (D2) depuis la mémoire non volatile principale (40), l'unité de commande principale (30) est configurée pour acquérir la seconde information (D2) depuis la première mémoire non volatile (13) via les premiers moyens de commande de communication (12) et pour stocker la seconde information (D2) dans la mémoire non volatile principale (40).
